# EUROPÄISCHE PATENTSCHRIFT

(11) **EP 3 684 233 B1**
(45) Veröffentlichungstag und Bekanntmachung des Hinweises auf die Patenterteilung: **03.11.2021**
(21) Anmeldenummer: 18822270.7
(22) Anmeldetag: 26.11.2018
(51) Int. Cl.: A47J 27/04, A47J 27/16

(54) **VORRICHTUNG ZUM AUFBEREITEN VON LEBENSMITTELN MIT DAMPF**
APPARATUS FOR PREPARING FOODSTUFFS WITH STEAM
DISPOSITIF POUR LA PRÉPARATION D'ALIMENTS AVEC DE LA VAPEUR

(30) Priorität: 04.12.2017 DE 102017128767
(43) Veröffentlichungstag der Anmeldung: 29.07.2020
(73) Patentinhaber: Carogusto AG, 8580 Amriswil (CH)
(72) Erfinder: GRENDELMEIER, Thomas, 8634 Hombrechtikon (CH)
(74) Vertreter: Patent- und Rechtsanwälte Behrmann Wagner PartG mbB
(86) Internationale Anmeldenummer: PCT/EP2018/082485
(87) Internationale Veröffentlichungsnummer: WO 2019/110340

(56) Entgegenhaltungen:
- DE-A1-102012 202 318
- DE-A1-102015 221 005
- US-A- 5 442 997

## Beschreibung

Die Erfindung betrifft eine Vorrichtung gemäß dem Oberbegriff des Anspruchs 1 zum Aufbereiten von in einem Gefäß aufgenommenen Lebensmitteln, insbesondere Fertiggerichten, (mit Dampf) umfassend eine Dampferzeugungseinheit zum Erzeugen von Dampf, eine mit der Dampferzeugungseinheit dampfleitend über eine Dampfversorgungsleitung verbundene Dampfzuführeinheit mit einer mindestens einer Dampfabgabeöffnung aufweisenden Dampfsonde sowie Antriebsmitteln zum, translatorischen, Verstellen der Dampfzuführeinheit relativ zu einer, bevorzugt entlang der Vertikalen unterhalb der Dampfzuführeinheit angeordneten, eine Spülwanne aufweisenden Spüleinrichtung mit Spülwasserbeaufschlagungsmitteln, insbesondere umfassend eine Sprühdüse zum Spülen, insbesondere Besprühen, der Dampfsonde nach einem Lebensmittelaufbereitungsvorgang (mit Spülwasser), wobei die Spülwanne fluitleitend mit einem Abflussabschnitt zum Abführen von verunreinigtem Spülwasser verbunden ist.

Aus der DE 10 2015 221 005 1 ist eine Vorrichtung zum Aufbereiten von in einem Gefäß aufgenommenen Lebensmitteln mit Dampf beschrieben, bei der eine Dampfzuführeinheit, die von einer Dampferzeugungseinheit mit Dampf versorgt wird, translatorisch relativ zu einer Spüleinrichtung in vertikaler Richtung verstellbar ist. Die Spüleinrichtung umfasst eine fest verrohrte Spülwanne, die von oben auf einer Arbeitsfläche montiert ist. Im Betrieb der bekannten Vorrichtung kann es zu Verstopfungen der starren, mit der Spülwanne fluitleitend verbundenen Abflussleitung kommen, deren Behebung gegebenenfalls eine aufwendige Demontage der festen Verrohrung notwendig macht.

Auch aus der DE 10 2012 202 318 B4 ist eine Lebensmittelaufbereitungsvorrichtung mit fest verrohrter Spülwanne bekannt.

Ausgehend von dem vorgenannten Stand der Technik liegt der Erfindung die Aufgabe zugrunde, eine erleichtert reinigbare Vorrichtung zum Aufbereiten von in einem Gefäß aufgenommenen Lebensmitteln anzugeben. Bevorzugt soll die Vorrichtung bzw. deren Spüleinrichtung zudem einfach bzw. ohne großen Aufwand montierbar sein.

Diese Aufgabe wird mit einer Vorrichtung mit den Merkmalen des Anspruchs 1 gelöst, d.h. bei einer gattungsgemäßen Vorrichtung dadurch, dass eine Spülwanne eine zu Reinigungs- und/oder Austauschzwecken, insbesondere werkzeuglos, von der Spülwanne lösbarer mit Dichtmitteln gegenüber der Spülwanne abgedichteter Ablauftrichter mit dem Abflussleitungsabschnitt festgelegt ist. Der Abflussleitungsabschnitt kann dabei einteilig, insbesondere monolithisch mit dem Ablauftrichter ausgebildet sein oder als von diesem separates und an diesem festgelegtes Bauteil.

Vorteilhafte Weiterbildungen der Erfindung sind in den Unteransprüchen angegeben.

Der Erfindung liegt der Gedanke zugrunde, im Bereich des Spülwannengrundes einen Ablauftrichter vorzusehen, über welchen verschmutztes Spülwasser zu dem einteilig mit dem Ablauftrichter ausgebildeten oder bevorzugt auslassseitig an diesem fixierten Abflussleitungsabschnitt durch eine Abflussöffnung des Ablauftrichters hindurch strömen kann. Der Ablauftrichter ist erfindungsgemäß lösbar an bzw. in der Spülwanne festgelegt, um diesen zu Reinigungs- und/oder Austauschzwecken des Ablauftrichters und/oder des Abflussleitungsabschnitts, insbesondere werkzeuglos von der Spülwanne demontieren zu können. Um ein Austreten von Spülwasser in einem Bereich zwischen dem Ablauftrichter und der Spülwanne sicher zu verhindern, sind der lösbaren Verbindung an der Spülwanne und/oder dem Ablauftrichter angeordnete Dichtmittel vorgesehen, die wie später noch erläutert werden wird bevorzugt gleichzeitig die Fixierfunktion für die Realisierung der lösbaren Verbindung zwischen Spülwanne und Ablauftrichter aufweisen. Kommt es in der Praxis zu einer Verstopfung des Ablaufs oder des Abflussleitungsabschnittes kann bei der erfindungsgemäßen Vorrichtung einfach, werkzeuglos der Ablauftrichter samt daran ausgebildetem oder daran festgelegtem Abflussleitungsabschnitt von der Spülwanne gelöst und gereinigt werden. Auch ist auf diese Weise bei Verschleiß ein Austausch von Ablauftrichter und/oder Abflussleitungsabschnitt auf einfach Weise möglich. Ganz besonders bevorzugt ist eine später noch im Detail erläuterte Ausführungsform, bei der der Abflussleitungsabschnitt ein freies Ende aufweist, welches beispielweise in einen Siphon oder einen Auffangbehälter mündet, insbesondere lose dort eingehängt ist bzw. hineinragt, um vor einer Entnahme des Ablauftrichters samt Abflussleitungsabschnitt, letzteren nicht von einem Gegenstück, insbesondere eine Rohrmuffe od.dgl. Abflussleitungsverbindung trennen zu müssen. Der Ablauftrichter bildet den Abfluss der Spülwanne und ist bevorzugt in eine boden- bzw. grundseitige Montageöffnung der Spülwanne lösbar eingesetzt, insbesondere von oben her, d.h. aus der Richtung einer oberen Spülwannenöffnung.

Wie bereits erwähnt ist es besonders bevorzugt, wenn die Dichtmittel zur Abdichtung der lösbaren Verbindung zwischen Ablauftrichter und Spülwanne als, insbesondere einzige, Fixiermittel zum, insbesondere formschlüssigen und/oder klemmenden und/oder verrastenden, Halten des Ablauftrichters ausgebildet sind. Mit anderen Worten ist gemäß einer besonders bevorzugten Ausführungsform vorgesehen über die Dichtmittel eine lösbare feste (und selbstverständlich dichte) Verbindung zwischen Spülwanne und Ablauftrichter auszubilden. Zu diesem Zweck ist es besonders bevorzugt, wenn die Dichtmittel zumindest abschnittsweise an der Spülwanne und/oder dem Ablauftrichter fixiert sind, insbesondere durch einteilige Ausbildung, beispielsweise im Mehrkomponentenspritzgussverfahren. Eine formschlüssige Verbindung kann beispielsweise dadurch realisiert werden, dass die Dichtmittel eine Umfangsnut im Bereich der Montageöffnung im Spülbecken und/oder gegenüberliegend am Ablauftrichter ausbilden, in die ein entsprechender Umfangswulst des jeweils radial gegenüberliegenden Teils formschlüssig, insbesondere rastend und/oder klemmend eingreift, oder umgekehrt.

Wie bereits angedeutet ist es besonders zweckmäßig, wenn die Spülwanne als Mehrkomponentenkunststoffteil ausgebildet ist, ganz besonders bevorzugt als Mehrkomponentenspritzgussteil. Dabei umfasst die Mehrkomponenten-Spülwanne ein zumindest abschnittsweise die Dichtmittel ausbildendes Elastomermaterial sowie ein verglichen mit dem Elastomermaterial starres Kunststoffmaterial, welches insbesondere die Wannenform und/oder eine später noch zu erläuternde, bevorzugt vorgesehene Montageplattenabschnittsform ausbildet. Zusätzlich zu der Dichtmittelfunktionalität zum dichten miteinander Verbinden des Ablauftrichters mit der Spülwanne kann das im Rahmen eines Mehrkomponentenspritzgussverfahrens fest an der Spülwanne ausgebildete Elastomermaterial auch später noch zu erläuternde weitere Funktionsabschnitte der Spülwanne ausbilden und so beispielsweise eine Restdampfableitungsöffnung begrenzen oder eine Abdichtung gegenüber einer Arbeitsfläche bilden.

Ganz besonders bevorzugt ist die lösbare Verbindung zwischen Ablauftrichter und Spülwanne derart ausgebildet, dass der Ablauftrichter durch Aufbringen einer Lösekraft in Richtung der darüber angeordneten Dampfzuführeinheit, also entlang der Vertikalen nach oben von der Spülwanne demontierbar ist. Mit anderen Worten ist der Ablauftrichter bevorzugt derart in einer unteren bzw. im Bereich des Spülwannenbodens angeordneten Montageöffnung eingesetzt, dass der Trichter, bevorzugt durch eine Kraft in Richtung einer oberen Spülwannenöffnung, bevorzugt im Rahmen einer rein translatorischen Bewegung, aus der Montageöffnung herausnehmbar ist, insbesondere unter Überwindung einer entsprechenden, bevorzugt durch die Dichtmittel realisierten Haltekraft. Selbstverständlich ist auch eine Fixierung bzw. ein Lösen durch eine rotatorische Bewegung, beispielsweise durch Verwirklichung einer Gewindeverbindung realisierbar - bevorzugt ist jedoch ein Lösen durch Aufbringen einer Zug- und/oder Druckkraft in vertikaler Richtung. Die Montage ist dann bevorzugt einfach durch Aufbringen einer der vorgenannten linearen Lösekraft entgegengerichteten Fixierkraft möglich, wobei der Ablauftrichter dabei bevorzugt axial gegen ein Stopp bzw. Widerlager an der Spülwanne gedrückt wird.

Besonders zweckmäßig ist eine Ausführungsform der Vorrichtung, bei der der Abflussleitungsabschnitt nicht starr ausgebildet ist, sondern als, bevorzugt lösbar am Ablauftrichter festgelegter, flexibler Abflussschlauch. Im Hinblick auf die Wahl des Schlauchmaterials gibt es unterschiedliche Möglichkeiten. So ist es beispielsweise denkbar den Schlauch als Kunststoffschlauch, insbesondere Wellrohrschlauch auszugestalten oder auch als extrudierter, im wesentlichen glatter Schlauch, insbesondere mit einem innenliegenden Gewebe zur Erhöhung der Festigkeit. Ganz besonders bevorzugt ist eine robuste Ausführung des Abflussschlauchs als Metallgewebeschlauch oder Metallwellrohrschlauch.

Wie bereits angedeutet ist es besonders bevorzugt, wenn der Abflussleitungsabschnitt, insbesondere der Abflussschlauch mit einem von dem Ablauftrichter abgewandeten freien Ende lose in eine Siphonöffnung eingeführt ist und/oder lose in einen Auffangbehälter, insbesondere einen Auffangbehälter der Vorrichtung, welcher ganz besonders bevorzugt in einem Bereich unterhalb einer später noch zu erläuternden Arbeitsplatte angeordnet ist, um somit eine, insbesondere werkzeuglose, Entnahme des Abflussleitungsabschnitts, insbesondere des Abflussschlauchs zusammen mit dem Ablauftrichter zu ermöglichen, ohne vorher den Abflussleitungsabschnitts von einem Gegenstück, beispielsweise einer Rohrmuffe oder -klemme demontieren zu müssen. Relativ ist selbstverständlich auch eine feste, dichte Montage des Abflussleitungsabschnitts an einem Gegenstück, insbesondere an einem Abflussrohr und/oder Siphon möglich.

Bevorzugt ist eine Ausführungsform, bei der die Spülwanne von einem plattenförmigen bzw. flächigen, ganz besonders bevorzugt einteilig (monolithisch) mit der Spülwanne, insbesondere im Spritzgussverfahren, ausgebildeten Montageplattenabschnitt umgeben ist. Alternativ kann der Montageplattenabschnitt von einer separaten, bevorzugt aus Kunststoff ausgebildeten Montageplatte ausgebildet sein, die bevorzugt, beispielsweise durch Verschrauben mit der Spülwanne, insbesondere einem Spülwannenrand verbunden ist.

Dabei ist es besonders zweckmäßig, wenn dieser Montageplattenabschnitt unterhalb einer Arbeitsplatte angeordnet ist bzw. die Arbeitsplatte auf dem Montageplattenabschnitt aufliegt und die Spülwanne durch eine Arbeitsplattenöffnung hindurch, d.h. aus vertikaler Richtung von oben her zugänglich ist. Die Spülwanne kann dabei mit einem oberen Umfangsrand die Arbeitsplattenöffnung durchsetzen und/oder flächenbündig mit einer oberen Arbeitsfläche der Arbeitsplattenöffnung abschließen. Denkbar ist auch eine vollständige Anordnung der Spülwanne unterhalb der Arbeitsplattenoberseite. Zum Verhindern eines Feuchtigkeitseintritts in einen Bereich oberhalb des Montageplattenabschnitts, d.h. in einen Bereich zwischen Arbeitsplatte und Montageplattenabschnitt hinein ist es bevorzugt, wenn der Montageplattenabschnitt und/oder die Spülwanne, insbesondere gegen eine Arbeitsplattenunterseite und/oder radial gegen einen Arbeitsplattenöffnungsumfangsrand mit einer Elastomerdichtung abgedichtet sind/ist. Besonders zweckmäßig ist es dabei, wenn es sich um eine integrale Elastomerdichtung des Montageplattenabschnitts und/oder der Spülwanne handelt, die bevorzugt im Mehrkomponentenspritzgussverfahren zusammen mit dem Montageplattenabschnitt und/oder der Spülwanne realisiert ist.

Ganz besonders zweckmäßig ist eine Ausführungsform der Vorrichtung, bei der an dem Montageplattenabschnitt ein, bevorzugt von einer oberen Spülwannenöffnung radial beabstandeter und/oder von dem Montageplattenabschnitt selbst gebildeter (oder alternativ darauf fixierter), Abstützabschnitt, bevorzugt aus Kunststoff, für die Dampfzuführeinheit ausgebildet ist, an dem diese in einer unteren Spülstellung aufliegt. Dem Abstützabschnitt ist dabei bevorzugt in der Arbeitsplatte eine korrespondierende Öffnung zugeordnet, die bevorzugt beabstandet ist von der der Spülwanne zugeordneten Arbeitsplattenöffnung. Bevorzugt durchsetzt der Abstützabschnitt diese Öffnung in vertikaler Richtung nach oben.

Zusätzlich oder alternativ ist in Weiterbildung der Erfindung mit Vorteil vorgesehen, dass in dem Montageplattenabschnitt eine, bevorzugt von einer oberen Spülwannenöffnung radial beabstandete und/oder von, bevorzugt integralen, ganz besonders bevorzugt im Rahmen eines Mehrkomponentenspritzgussverfahrens realisierten bzw. angespritzten Elastomermaterial begrenzte, Öffnung ausgebildet ist, in der eine Restdampfableitungsleitung aufgenommen ist. Auch eine solche Ausführungsform lässt sich bevorzugt im Mehrkomponentenspritzgussverfahren realisieren und erhöht die Funktionalität der Baugruppe, umfassend den Montageplattenabschnitt und die Spülwanne.

Ganz besonders bevorzugt ist es, wenn in der Spülwanne eine Spüldüsenmontageöffnung ausgebildet ist, in der eine Spüldüse zum Beaufschlagen der Dampfsonde mit einem Spülwassersprühstrahl angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ausschnittsweise eine Vorrichtung zum Aufbereiten von in einem Gefäß aufgenommenen Lebensmitteln, umfassend eine vertikal verstellbare Dampferzeugungseinheit sowie eine gezeigte Spülwanne, integriert in eine Arbeitsplatte,
- Fig. 2: in einer perspektivischen Darstellung die Spülwanne gemäß Fig. 1 sowie einen lösbar in diese einsetzbaren Ablauftrichter mit daran festgelegtem, als flexibler Schlauch ausgebildeten Abflussleitungsabschnitt,
- Fig. 3: eine Darstellung der Spülwanne ohne Arbeitsplatte, wobei die Spülwanne an einem monolithisch mit dieser ausgebildeten Montageplattenabschnitt umgeben ist, und
- Fig. 4: eine Darstellung der Spülwanne mit Montageplattenabschnitt in einer Ansicht von unten.

In den Figuren sind gleiche Elemente und Elemente mit der gleichen Funktion mit den gleichen Bezugszeichen gekennzeichnet.

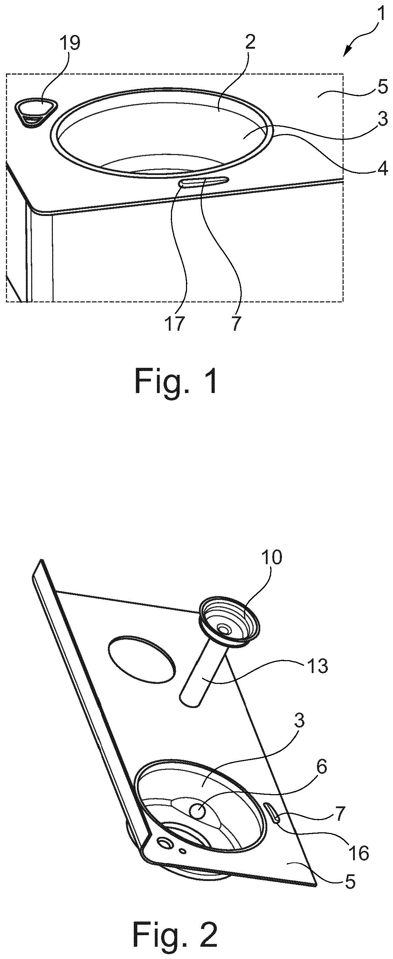

In Fig. 1 ist ausschnittsweise eine Vorrichtung 1 zum Aufbereiten von in einem Gefäß aufgenommenen Lebensmitteln, insbesondere von Fertiggerichten gezeigt. Konkret ist in Fig. 1 eine Spüleinrichtung 2 mit Spülwanne 3 dargestellt, die durch eine Arbeitsplattenöffnung 4 hindurch in vertikaler Richtung von oben zugänglich ist. Die Arbeitsplattenöffnung 4 befindet sich in einer hier beispielhaft aus Edelstahl ausgebildeten Arbeitsplatte 5 mit horizontaler Orientierung.

Nicht gezeigt ist eine Dampferzeugungseinheit der Vorrichtung zum Erzeugen von Dampf sowie eine dampfleitend über eine Dampfversorgungsleitung mit dieser verbundene Dampfzuführeinheit, die beispielsweise wie in der DE 10 2015 221 005 A1 beschrieben und in den dortigen Figuren, insbesondere Fig. 1 gezeigt ausgebildet sein kann. Die Dampfzuführeinheit ist translatorisch entlang einer Vertikalachse mit entsprechenden Antriebsmitteln relativ zu einem Gefäß mit darin aufgenommenen Lebensmitteln verstellbar, welches sich zum Aufbereiten bzw. Erwärmen der Lebensmittel in einem Bereich oberhalb der in Fig. 1 gezeigten Spülwanne 3 befindet, insbesondere getragen von einem horizontal verstellbaren Trägerschlitten. Die Dampfzuführeinheit umfasst bevorzugt eine Haube zur dichten Auflage auf dem Gefäß zur Definition eines Dampfraums. Der Dampf wird in die Lebensmittel mit einer Dampfsonde eingebracht, wie diese beispielsweise in der DE 10 2015 221 005 A1 gezeigt ist - die Dampfsonde ist bevorzugt ausgebildet und angeordnet bzw. angetrieben zum gleichzeitigen Bedampfen und Durchmischen der Lebensmittel, um somit eine bessere Wärmeenergieverteilung zu bewirken.

Nicht gezeigt sind Spülwasserbeaufschlagungsmittel, insbesondere umfassend eine Spüldüse, die in eine in Fig. 2 gezeigte Spüldüsenöffnung 6 in der Spülwanne 3 eingesetzt bzw. montiert werden kann.

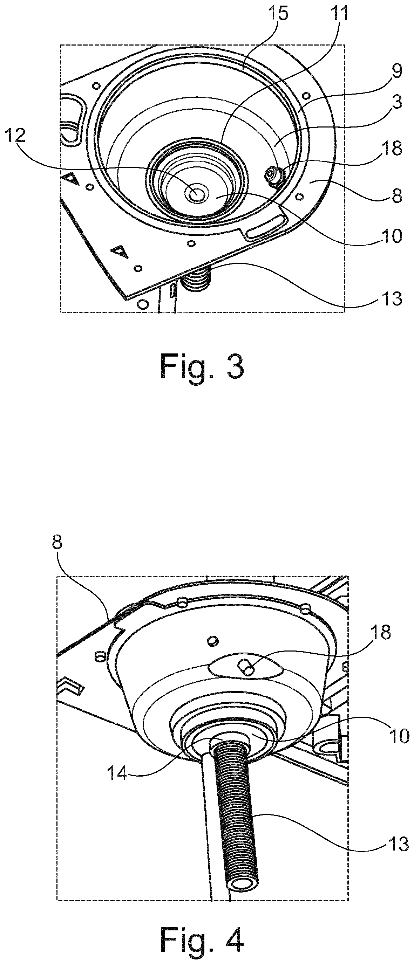

Nach einer oder mehreren Aufbereitungsvorgängen kann die Dampferzeugungseinheit entlang der Vertikalen nach unten verstellt werden, insbesondere soweit, bis die Dampfsonde in die gezeigte Spülwanne 3 hineinragt, wobei die Spülwanne 3 verschlossen wird von einer vorerwähnten Haube der Dampfzuführeinheit. Die Dampfzuführeinheit stützt sich in der zuvor beschriebenen (unteren) Spülstellung an einem Abstützabschnitt 7 ab, der monolithisch ausgebildet ist mit der Spülwanne 3 und hierzu an einem in Fig. 3 gezeigten Montageplattenabschnitt 8 ausgebildet ist, welche wiederum einteilig mit der Spülwanne 3 ausgebildet ist. Alternativ handelt es sich bei dem Montageplattenabschnitt 8 (und somit bei dem Abstützabschnitt 7) um ein von der Spülwanne 3 separates Bauteil, welches an dieser festgelegt ist. Der vorerwähnte Montageplattenabschnitt 8 (unabhängig davon ob diese einteilig oder separat von der Spülwanne 3 ausgebildet ist), ist unterhalb der Arbeitsplatte 5 angeordnet - d.h. die Arbeitsplatte 5 liegt im montierten Zustand auf dem Montageplattenabschnitt 8 auf. Abgedichtet wird die Kombination aus Montageplattenabschnitt 8 und Spülwanne 3 gegenüber der Arbeitsplatte 5, genauer gegenüber einer Unterseite der Arbeitsplatte 5 mithilfe einer ringförmigen Elastomerdichtung 9, die beispielsweise im Zweikomponentenspritzgussverfahren an den Montageplattenabschnitt 8 und/oder die Spülwanne 3 angespritzt wurde.

In Fig. 3 ist zu erkennen, dass sich am Grund bzw. Boden der Spülwanne 3 ein Ablauftrichter 10 befindet, der über Dichtmittel 11 gegenüber der Spülwanne 3 abgedichtet ist. Der Ablauftrichter 10 weist eine zentrische Abflussöffnung 12 auf, die zu einem als Wellrohrschlauch ausgebildeten Abflussleitungsabschnitt 13 führt, welcher, vorliegend beispielhaft mittels einer Fixierschelle 14 am Ablauftrichter 10, genauer einem Abflussfortsatz des Ablauftrichters 10 fixiert ist.

Der flexible Abflussschlauch bzw. der Abflussleitungsabschnitt 13 ist gemeinsam mit dem Ablauftrichter 10 werkzeuglos aus der Spülwanne 3 demontierbar - hierzu muss lediglich eine in vertikaler Richtung hin zu einer oberen Spülwannenöffnung 15 orientierte Lösekraft auf den Ablauftrichter 10 aufgebracht werden.

Der Ablauftrichter 10 wird in dem gezeigten Ausführungsbeispiel in der in Fig. 3 gezeigten Fixierposition gehalten von den Dichtmitteln 11. Diese sind einteilig im Zweikomponentenspritzgussverfahren mit der Spülwanne 3 ausgebildet und weisen eine Ringnut auf, in der ein entsprechender Umfangswulst des Ablauftrichters 10 aufgenommen ist.

In Fig. 2 ist der Ablauftrichter 10 mit dem als flexibler Schlauch ausgebildeten Abflussleitungsabschnitt 13 im demontierten Zustand gezeigt.

Wie eingangs erwähnt, ist an dem Montageplattenabschnitt 8 der Abstützabschnitt 7 ausgebildet. Dieser durchsetzt eine diesem zugeordnete Öffnung 16 in der Arbeitsplatte 5, und zwar mit Radialabstand zur Spülwanne 3. Die Abdichtung zum Verhindern eines Eindringens von Wasser in einen Bereich zwischen Montageplattenabschnitt 8 und Unterseite der Arbeitsplatte 5 erfolgt über eine Elastomerdichtung 17, die den Abstützabschnitt 7 umgibt, und die bevorzugt im Zweikomponentenkunststoffspritzgussverfahren einteilig mit dem Montageplattenabschnitt 8 ausgebildet ist.

In der Spülwanne 3 befindet sich, wie erwähnt, die Spüldüsenöffnung 6 (vgl. Fig. 2), in die in der Darstellung gemäß Fig. 3 eine Spüldüse 18 der Spülwasserbeaufschlagungsmittel montiert ist.

Mit Radialabstand zu der Spülwanne 3 ist in dem Montageplattenabschnitt 8 eine (weitere) Öffnung 19 vorgesehen, die von Elastomermaterial umgeben ist, und die zur Aufnahme einer Restdampfableitungsleitung dient.

Der Öffnung 19 ist eine korrespondierende bzw. fluchtende Öffnung in der Arbeitsplatte 5 zugeordnet.

### Bezugszeichenliste

- 1: Vorrichtung
- 2: Spüleinrichtung
- 3: Spülwanne
- 4: Arbeitsplattenöffnung
- 5: Arbeitsplatte
- 6: Spüldüsenöffnung
- 7: Abstützabschnitt
- 8: Montageplattenabschnitt
- 9: Elastomerdichtung
- 10: Ablauftrichter
- 11: Dichtmittel
- 12: Abflussöffnung
- 13: Abflussleitungsabschnitt
- 14: Fixierschelle
- 15: obere Spülwannenöffnung
- 16: Öffnung in Arbeitsplatte
- 17: Elastomerdichtung
- 18: Spüldüse
- 19: Öffnung in Montageplattenabschnitt

## Patentansprüche

1. Vorrichtung (1) zum Aufbereiten von in einem Gefäß aufgenommenen Lebensmitteln, insbesondere Fertiggerichten, umfassend eine Dampferzeugungseinheit zum Erzeugen von Dampf, eine mit der Dampferzeugungseinheit dampfleitend über eine Dampferversorgungsleitung verbundene Dampfzuführeinheit mit einer mindestens eine Dampfabgabeöffnung aufweisenden Dampfsonde sowie Antriebsmitteln zum, insbesondere translatorischen, Verstellen der Dampfzuführeinheit relativ zu einer, bevorzugt entlang der Vertikalen unterhalb der Dampfzuführeinheit angeordneten, eine Spülwanne (3) aufweisenden Spüleinrichtung (2) mit Spülwasserbeaufschlagungsmitteln, insbesondere umfassend eine Sprühdüse (18), zum Spülen der Dampfsonde nach einem Lebensmittelaufbereitungsvorgang, wobei die Spülwanne (3) fluidleitend mit einem Abflussleitungsabschnitt (13) zum Abführen von verunreinigtem Spülwasser verbunden ist,
**dadurch gekennzeichnet,**
**dass** an der Spülwanne (3) ein zu Reinigungs- und/oder Austauschzwecken, insbesondere werkzeuglos, von der Spülwanne (3) lösbarer, mit Dichtmitteln (11) gegenüber der Spülwanne (3) abgedichteter Ablauftrichter (10) mit dem Abflussleitungsabschnitt (13) festgelegt ist.

2. Vorrichtung nach Anspruch 1,
**dadurch gekennzeichnet,**
**dass** die Dichtmittel (11) als, insbesondere einzige, Fixiermittel zum, insbesondere formschlüssigen und/oder klemmenden und/oder verrastenden, Halten des Ablauftrichters (10) ausgebildet sind.

3. Vorrichtung nach Anspruch 2,
**dadurch gekennzeichnet,**
**dass** die Spülwanne (3) als Mehrkomponentenkunststoffteil, insbesondere Mehrkomponentenspritzgussteil ausgebildet ist, umfassend ein zumindest abschnittsweise die Dichtmittel (11) ausbildendes Elastomermaterial sowie ein verglichen mit dem Elastomermaterial starres Kunststoffmaterial.

4. Vorrichtung nach einem der Ansprüche 1 bis 3,
**dadurch gekennzeichnet,**
**dass** der Ablauftrichter (10) in einer unteren Montageöffnung der Spülwanne (3) eingesetzt ist und derart an der Spülwanne (3) lösbar festgelegt ist, dass der Ablauftrichter (10) durch Aufbringen einer Lösekraft entlang der Vertikalen in Richtung der Dampfzuführeinheit von der Spülwanne (3) demontierbar ist.

5. Vorrichtung nach einem der vorhergehenden Ansprüche,
**dadurch gekennzeichnet,**
**dass** der Abflussleitungsabschnitt (13) als, insbesondere lösbar am Ablauftrichter (10) festgelegter, flexibler Abflussschlauch ausgebildet ist.

6. Vorrichtung nach einem der vorhergehenden Ansprüche,
**dadurch gekennzeichnet,**
**dass** der Abflussleitungsabschnitt (13) an einem Siphon festgelegt ist, oder lose in dieses eingeführt ist, oder, bevorzugt lose, in einen Auffangbehälter, bevorzugt der Vorrichtung (1), mündet.

7. Vorrichtung nach einem der vorhergehenden Ansprüche,
**dadurch gekennzeichnet,**
**dass** die Spülwanne (3) von einem plattenförmigen, bevorzugt einteilig mit der Spülwanne (3) ausgebildeten Montageplattenabschnitt (8) umgeben ist.

8. Vorrichtung nach Anspruch 7,
**dadurch gekennzeichnet,**
**dass** die Spülwanne (3) durch eine Arbeitsplattenöffnung (4) einer Arbeitsplatte (5) zugänglich ist, die auf dem Montageplattenabschnitt (8) aufliegt, wobei der Montageplattenabschnitt (8) und/oder die Spülwanne (3), insbesondere gegen eine Arbeitsplattenunterseite und/oder radial gegen einen Arbeitsplattenöffnungsrand mit einer, bevorzugt einteilig an dem Montageplattenabschnitt (8) und/oder der Spülwanne (3) ausgebildeten, Elastomerdichtung abgedichtet ist.

9. Vorrichtung nach einem der Ansprüche 7 oder 8,
**dadurch gekennzeichnet,**
**dass** an dem Montageplattenabschnitt (8), ein, bevorzugt von einer oberen Spülwannenöffnung (15) radial beabstandeter und/oder von dem Montageplattenabschnitt (8) gebildeter, Abstützabschnitt (7), bevorzugt aus Kunststoff, für die Dampfzuführeinheit ausgebildet ist, an dem diese in einer unteren Spülstellung aufliegt.

10. Vorrichtung nach einem der vorhergehenden Ansprüche,
**dadurch gekennzeichnet,**
**dass** in dem Montageplattenabschnitt (8) eine, bevorzugt von einer oberen Spülwannenöffnung (15) radial beabstandete und/oder von, bevorzugt integralem, Elastomermaterial begrenzte, Öffnung ausgebildet ist, in der eine Restdampfableitungsleitung aufgenommen ist.

11. Vorrichtung nach einem der vorhergehenden Ansprüche,
**dadurch gekennzeichnet,**
**dass** in der Spülwanne (3) eine Spüldüsenmontageöffnung ausgebildet ist, in der eine Spüldüse (3) zum Beaufschlagen der Dampfsonde mit einem Spülwassersprühstrahl angeordnet ist.

## Claims

1. A device (1) for preparing foods received in a vessel, in particular ready meals, the device (1) comprising a steam generator unit for generating steam, a steam delivery unit having a steam probe containing at least one steam discharge opening, the steam delivery unit being connected to the steam generator unit in a steam-conducting manner via a steam feed line, and drive means for the, in particular translational, displacement of the steam delivery unit relative to a rinsing device (2), preferably disposed below the steam delivery unit along the vertical, having a rinsing tank (3) and rinsing water application means, in particular comprising a rinsing nozzle (18), for rinsing the steam probe after a food preparation process, the rinsing tank (3) being in fluid communication with a drain line section (13) for discharging dirty rinsing water,
**characterized in that**
a drain funnel (10) comprising the drain line section (13) is fixed to the rising tank (3), wherein the drain funnel (10) can be detached from the rinsing tank (3), in particular without any tools being required, for cleaning and/or exchange purposes and is sealed in relation to the rinsing tank (3) by sealing means (11).

2. The device according to claim 1,
**characterized in that**
the sealing means (11) are realized as, in particular sole, fixing means for the, in particular form-fitting and/or clamping and/or locking, support of the drain funnel (10).

3. The device according to claim 2,
**characterized in that**
the rinsing tank (3) is realized as a multicomponent plastic part, in particular multicomponent injection-molded part, comprising an elastomer material which at least partially realizes the sealing means (11) and plastic material which is rigid compared to the elastomer material.

4. The device according to any one of claims 1 to 3,
**characterized in that**
the drain funnel (10) is inserted into a lower mounting opening of the rinsing tank (3) and is fixed to the rinsing tank (3) so as to be detachable in such a manner that the drain funnel (10) can be removed from the rinsing tank (3) by applying a detachment force along the vertical in the direction of the steam delivery unit.

5. The device according to any one of the preceding claims,
**characterized in that**
the drain line section (13) is realized as a flexible drain hose, in particular fixed to the drain funnel (10) so as to be detachable.

6. The device according to any one of the preceding claims,
**characterized in that**
the drain line section (13) is fixed to a siphon, or loosely inserted into said siphon, or opens into a collecting vessel, preferably of the device (1), preferably in a loose manner.

7. The device according to any one of the preceding claims,
**characterized in that**
the rinsing tank (3) is surrounded by a plate-shaped mounting plate section (8), preferably realized in one piece with the rinsing tank (3).

8. The device according to claim 7,
**characterized in that**
the rinsing tank (3) can be accessed through a work surface opening (4) of a work surface (5) which rests on the mounting plate section (8), the mounting plate section (8) and/or the rinsing tank (3), being sealed, in particular in relation to a bottom side of the work surface and/or in relation to an edge of the work surface opening in the radial direction by an elastomer seal, preferably realized in one piece on the mounting plate section (8) and/or the rinsing tank (3).

9. The device according to claim 7 or 8,
**characterized in that**
a support section (7), preferably made of plastic, for the steam delivery unit is realized on the mounting plate section (8), the support section (7) being preferably spaced apart from an upper rinsing tank opening (15) in the radial direction and/or realized by the mounting plate section (8), the steam delivery unit resting on said support section (7) in a lower rinsing position.

10. The device according to any one of the preceding claims,
**characterized in that**
an opening is realized in the mounting plate section (8), the opening being preferably spaced apart from an upper rinsing tank opening (15) in the radial direction and/or limited by a, preferably integral, elastomer material, a residual steam drain line being received in said opening.

11. The device according to any one of the preceding claims,
**characterized in that**
a rinsing nozzle mounting opening is realized in the rinsing tank (3), a rinsing nozzle (3) for applying a rinsing water spray jet to the steam probe being disposed in the rinsing nozzle mounting opening.

## Revendications

1. Dispositif (1) de préparation de produits alimentaires, notamment de plats préparés, reçus dans un récipient, le dispositif (1) comprenant une unité de génération de vapeur pour la génération de vapeur, une unité d'alimentation en vapeur en liaison conductrice de vapeur avec l'unité de génération de vapeur par une conduite d'alimentation en vapeur, l'unité d'alimentation en vapeur comprenant une sonde de vapeur ayant au moins une ouverture de sortie de vapeur et l'unité d'alimentation en vapeur comprenant aussi des moyens d'entraînement pour le déplacement, notamment en translation, de l'unité d'alimentation en vapeur par rapport à un dispositif de rinçage (2), de préférence disposé le long de la verticale en dessous de l'unité d'alimentation en vapeur, ayant une cuve de rinçage (3) et ayant des moyens d'application d'eau de rinçage, notamment comprenant une buse de pulvérisation (18), pour le rinçage de la sonde de vapeur après un processus de préparation de produit alimentaire, la cuve de rinçage étant en liaison conductrice de fluide avec une partie de conduite d'évacuation (13) pour l'évacuation d'eau de rinçage polluée,
**caractérisé en ce**
**qu'**un entonnoir d'écoulement (10) comprenant la partie de conduite d'évacuation (1) est fixé à la cuve de rinçage (3), dans lequel l'entonnoir d'écoulement (10) peut être séparé de la cuve de rinçage (3), notamment sans outil, à des fins de nettoyage et/ou de remplacement et est étanchéifié par rapport à la cuve de rinçage (3) au moyen de moyens d'étanchéité (11).

2. Dispositif selon la revendication 1,
**caractérisé en ce que**
les moyens d'étanchéité (11) sont conçus comme, notamment les seuls, moyens de fixation pour retenir l'entonnoir d'écoulement (10), notamment par liaison de forme et/ou par serrage et/ou par verrouillage.

3. Dispositif selon la revendication 2,
**caractérisé en ce que**
la cuve de rinçage (3) est conçue comme pièce en matière plastique à plusieurs composants, notamment comme pièce moulée par injection à plusieurs composants, comprenant une matière élastomère réalisant, au moins partiellement, les moyens d'étanchéité (11) et une matière plastique qui est rigide par rapport à la matière élastomère.

4. Dispositif selon l'une quelconque des revendications 1 à 3,
**caractérisé en ce que**
l'entonnoir d'écoulement (10) est inséré dans une ouverture de montage inférieure de la cuve de rinçage (3) et est fixé de manière séparable à la cuve de rinçage (3) de telle manière que l'entonnoir d'écoulement (10) peut être désassemblé de la cuve de rinçage (3) par l'application d'une force de desserrage le long de la verticale dans la direction de l'unité d'alimentation en vapeur.

5. Dispositif selon l'une quelconque des revendications précédentes,
**caractérisé en ce que**
la partie de conduite d'évacuation (13) est réalisée comme tuyau d'évacuation flexible qui est fixé à l'entonnoir d'écoulement (10), notamment de manière séparable.

6. Dispositif selon l'une quelconque des revendications précédentes,
**caractérisé en ce que**
la partie de conduite d'évacuation (13) est fixée à un siphon, ou est insérée de manière lâche dans la partie de conduite d'évacuation (13), ou débouche, de préférence de manière lâche, dans un récipient collecteur, de préférence du dispositif (1).

7. Dispositif selon l'une quelconque des revendications précédentes,
**caractérisé en ce que**
la cuve de rinçage (3) est entourée par une partie de plaque de montage (8) en forme de plaque qui est de préférence réalisée en une pièce avec la cuve de rinçage (3).

8. Dispositif selon la revendication 7,
**caractérisé en ce que**
la cuve de rinçage (3) est accessible par une ouverture de plaque de travail (4) d'une plaque de travail (5) qui repose sur la partie de plaque de montage (8), dans lequel la partie de plaque de montage (8) et/ou la cuve de rinçage (3) est étanchéifiée, notamment par rapport à une face inférieure de plaque de travail et/ou radialement par rapport à un bord d'ouverture de plaque de travail, au moyen d'un joint en élastomère qui est de préférence réalisé en une pièce sur la partie de plaque de montage (8) et/ou sur la cuve de rinçage (3).

9. Dispositif selon la revendication 7 ou la revendication 8,
**caractérisé en ce**
**qu'**une partie de support (7), de préférence en plastique, pour l'unité d'alimentation en vapeur est réalisée sur la partie de plaque de montage (8), la partie de support (7) étant de préférence radialement espacée d'une ouverture supérieure de cuve de rinçage (15) et/ou formée par la partie de plaque de montage (8), l'unité d'alimentation en vapeur reposant sur la partie de support (7) dans une position inférieure de rinçage.

10. Dispositif selon l'une quelconque des revendications précédentes,
**caractérisé en ce**
**qu'**une ouverture qui est de préférence radialement espacée d'une ouverture supérieure de cuve de rinçage (15) et/ou délimitée par de matière élastomère, de préférence intégrale, est réalisée dans la partie de plaque de montage (8), une conduite d'évacuation de vapeur résiduelle étant reçue dans l'ouverture.

11. Dispositif selon l'une quelconque des revendications précédentes,
**caractérisé en ce**
**qu'**une ouverture de montage de buse de rinçage est réalisée dans la cuve de rinçage (3), dans lequel une buse de rinçage (3) pour appliquer un jet de pulvérisation d'eau de rinçage à la sonde de vapeur est disposée dans l'ouverture de montage de buse de rinçage.
